# EUROPÄISCHE PATENTSCHRIFT

(11) **EP 2 055 800 B1**
(45) Veröffentlichungstag und Bekanntmachung des Hinweises auf die Patenterteilung: **04.01.2012**
(21) Anmeldenummer: 07021494.5
(22) Anmeldetag: 05.11.2007
(51) Int. Cl.: C23C 4/02, B05B 15/04, F01D 5/28, F01D 25/28

(54) **Bauteilhaltevorrichtung zur Verwendung in einer Beschichtungsanlage und Verfahren zum Beschichten eines Bauteils**
Component holding device for use in a coating facility and method for coating a component
Dispositif de support de composant destiné à l'utilisation dans une installation de revêtement et procédé de revêtement d'un composant

(43) Veröffentlichungstag der Anmeldung: 06.05.2009
(73) Patentinhaber: SIEMENS AKTIENGESELLSCHAFT, 80333 München (DE)
(72) Erfinder: Berndt, Thomas, 12524 Berlin (DE); Ladru, Francis-Jurjen, Dr., 13587 Berlin (DE); Mensing, Marcus, 13465 Berlin (DE); Motzkus, Ralf, 13187 Berlin (DE)

(56) Entgegenhaltungen:
- EP-A- 1 388 592
- EP-A- 1 762 303

## Beschreibung

Die vorliegende Erfindung betrifft eine Bauteilhaltevorrichtung zur Verwendung in einer Beschichtungsanlage, in der ein Beschichtungsmaterial auf ein Bauteil gespritzt wird, das einen zu beschichtenden und einen nicht zu beschichtenden Abschnitt aufweist. Das Bauteil kann insbesondere eine Turbinenschaufel sein. Daneben betrifft die Erfindung ein Verfahren zum Beschichten eines Bauteils, insbesondere einer Turbinenschaufel, welches sowohl wenigstens einen zu beschichtenden Abschnitt als auch wenigstens einen nicht zu beschichtenden Abschnitt aufweist, wobei in dem Verfahren ein Beschichtungsmaterial auf das Bauteil aufgespritzt wird.

Thermisch und mechanisch hochbelastete Bauteile wie beispielsweise Turbinenbauteile und hierbei insbesondere Turbinenschaufeln, werden in der Regel mit einem Beschichtungsmaterial beschichtet, um die Temperaturbeständigkeit und/oder die Abrasionsfestigkeit des Bauteils zu erhöhen. Typische Beschichtungen, die zum Beschichten von Turbinenschaufeln zum Einsatz kommen, sind sogenannte MCrAlX-Beschichtungen, wobei M für Eisen (Fe), Kobalt (Co) oder Nickel (Ni), Cr für Chrom, Al für Aluminium und X für Yttrium (Y) und/oder Silizium (Si), Scandium (Sc) und/oder zumindest ein Element der seltenen Erden oder Hafnium stehen. Weiterhin kommen insbesondere bei Turbinenschaufeln keramische Wärmedämmschichten (TBC, Thermal Barrier Coating) zum Einsatz wie beispielsweise Zirkoniumoxid, dessen Struktur zumindest teilweise durch Yttriumoxid stabilisiert ist. Die beschriebenen Beschichtungen werden mittels Spritzverfahren auf die zu beschichtenden Bauteile aufgebracht. Beispiele für solche Spritzverfahren sind Hochgeschwindigkeitsflammspritzen und Plasmaspritzen.

Oft weisen die zu beschichtenden Bauteile neben einem oder mehreren zu beschichtenden Abschnitten auch einen oder mehrere Abschnitte auf, auf die keine Beschichtung aufgebracht werden soll. EP 1 388 592 A1 beschreibt daher ein Verfahren und eine Vorrichtung zur Isolierung eines Oberflächenbereichs eines Werkstückes während eines Beschichtungsverfahrens. Das Werkstück ist hierbei ein Kugelzapfen, welcher einen Gewindeabschnitt umfasst, der nicht zu beschichten ist. Der Gewindeabschnitt wird in eine Abdeckhülse geschoben, in deren Öffnungsbereich ein Abdichtmittel vorhanden ist, welches das Eindringen eines Beschichtungsfluids in das Innere der Abdeckhülse verhindern soll. Insbesondere ist das Material der Steckhülse im Vergleich zum Material des Kugelzapfens so gewählt, dass es sich aufgrund unterschiedlicher thermischer Ausdehnungsverhalten so ausdehnt, dass es im Bereich der Öffnung fest am Kugelzapfen anliegt, wenn die Beschichtung bei erhöhten Temperaturen durchgeführt wird. In dieser Entgegenhaltung werden jedoch keine Spritzverfahren zum Beschichten verwendet.

Ein Verfahren zum Vorbereiten von Turbinenschaufeln für das Spritzbeschichten sowie eine Halterung zur Fixierung einer solchen Turbinenschaufel sind in EP 1 762 303 A1 beschrieben. Die Turbinenschaufel umfasst einen Schaufelfuß, ein Schaufelblatt und eine zwischen Schaufelfuß und Schaufelblatt angeordnete Schaufelplattform. Das Schaufelblatt und die dem Schaufelblatt zugewandte Oberfläche der Schaufelplattform stellen einen zu beschichtenden Abschnitt der Turbinenschaufel dar, wohingegen die übrigen Bereiche der Schaufelplattform zusammen mit dem Schaufelfuß einen nicht zu beschichtenden Abschnitt der Turbinenschaufel bilden.

Zum Durchführen eines Beschichtungsprozesses wird die Turbinenschaufel mit dem Schaufelfuß in den von der Halterung gebildeten Hohlraum eingesetzt. Dabei verbleibt zwischen dem Rand der Öffnung und dem nicht zu beschichtenden Abschnitt der Turbinenschaufel ein Spalt, der durch eine Abschirmung überbrückt wird, die an der nicht zu beschichtenden Umfangfläche der Schaufelplattform anliegt und bis zu dem Schaufelblatt zugewandten Oberfläche der Schaufelplattform reicht. Der nicht zu beschichtende Abschnitt der Turbinenschaufel befindet sich daher entweder im Inneren der Halterung oder ist durch die Abschirmung abgedeckt.

In den beschriebenen Vorrichtungen kommt es jedoch aufgrund des Anliegens der Hülse beziehungsweise des Abdeckelementes an dem zu beschichtenden Bauteil zu Schichtbrücken zwischen dem Bauteil und der Hülse beziehungsweise zwischen dem Bauteil und dem Abdeckelement. Beim Ausbauen des Bauteils aus der Hülse beziehungsweise beim Entfernen des Abdeckelementes kann es daher zu Abplatzungen in dem beschichteten Abschnitt kommen, welche die Integrität der Beschichtung beeinträchtigen. Derartige Bauteile müssen unter Umständen völlig entschichtet und neu beschichtet werden.

Gegenüber diesem Stand der Technik ist es eine Aufgabe der vorliegenden Erfindung, eine vorteilhafte Bauteilhaltevorrichtung zur Verwendung in einer Beschichtungsanlage zur Verfügung zu stellen. Außerdem ist es gegenüber diesem Stand der Technik eine weitere Aufgabe der vorliegenden Erfindung, ein vorteilhaftes Verfahren zum Beschichten eines Bauteils, welches sowohl wenigstens einen zu beschichtenden Abschnitt als auch wenigstens einen nicht zu beschichtenden Abschnitt aufweist, zur Verfügung zu stellen.

Die genannten Aufgaben werden durch eine Bauteilhaltevorrichtung nach Anspruch 1 beziehungsweise ein Verfahren zum Beschichten eines Bauteils nach Anspruch 12 gelöst. Die abhängigen Ansprüche enthalten vorteilhafte Ausgestaltungen der Erfindung. Die Merkmale der abhängigen Ansprüche können hierbei auch miteinander kombiniert werden.

Eine erfindungsgemäße Bauteilhaltevorrichtung zur Verwendung in einer Beschichtungsanlage, in welcher ein Beschichtungsmaterial auf ein Bauteil gespritzt wird, das einen zu beschichtenden und einen nicht zu beschichtenden Abschnitt aufweist, umfasst eine Bauteilhalterung, die einen Hohlraum zur wenigstens teilweisen Aufnahme des nicht beschichtenden Abschnitts des Bauteils und eine Einführöffnung zum Einführen des Bauteils aufweist. Die Bauteilhalterung ist dabei derart ausgestaltet, dass ein Teil des nicht zu beschichtenden Abschnitts vom Hohlraum nicht geschützt ist. Außerdem umfasst die erfindungsgemäße Bauteilhaltevorrichtung ein an der Bauteilhalterung anzuordnendes oder in die Bauteilhalterung integriertes Abschattungselement, das mit Abstand von dem durch den Hohlraum nicht geschützten Teil des nicht zu beschichtenden Bauteilabschnitts eines eingeführten Bauteils anzuordnen oder angeordnet ist.

Durch die erfindungsgemäße Ausgestaltung der Bauteilhaltevorrichtung ist der größte Teil des nicht zu beschichtenden Abschnitts im Hohlraum der Bauteilhalterung angeordnet und so geschützt. Ein weiterer Teil des nicht zu beschichtenden Abschnittes ist jedoch von dem Hohlraum nicht geschützt, beispielsweise weil er aus dem Hohlraum herausragt oder die Einführöffnung größer ist als die Abmessung des Bauteils, so dass ein Spalt zwischen dem Rand der Einführöffnung und dem Bauteil verbleibt. Dieser durch den Hohlraum nicht geschützte Teil des nicht zu beschichtenden Abschnitts wird mittels des Abschattungselementes abgeschattet, sodass er sich während des Spritzens im Spritzschatten befindet. Dadurch kann erreicht werden, dass ein Bereich, in dem die Bauteilhalterung das Bauteil kontaktiert, vollständig im Spritzschatten des Abschattungselementes liegt. Schichtbrücken können daher vollständig vermieden werden. Zwar kann in dem an den zu beschichtenden Abschnitt des Bauteils angrenzenden abgeschatteten nicht zu beschichtenden Abschnitt des Bauteils Beschichtungsmaterial abgelagert werden, jedoch kann dieser Randbereich durch geeignete Dimensionierung des Abschattungselements von Bereichen ferngehalten werden, in denen die Bauteilhalterung das Bauteil kontaktiert, so dass sich keine Schichtbrücken bilden. In dem Abschattungsbereich vorhandenes Beschichtungsmaterial kann nach dem Beschichten abgeschliffen werden.

Da Schichtbrücken zuverlässig vermieden werden können, kann der Anteil an zu entschichtenden und wieder zu beschichtenden Bauteilen im Vergleich zur Verwendung von Bauteilhaltevorrichtungen nach Stand der Technik deutlich reduziert werden.

Die Bauteilhalterung kann insbesondere derart ausgestaltet sein, dass der nicht geschützte Teil des nicht zu beschichtenden Abschnitts aus dem Hohlraum herausragt. Als Abschattungselement kann dann wenigstens ein von der Bauteilhalterung getrenntes Abschattungselement vorhanden sein, die Bauteilhalterung weist dann wenigstens ein Halteelement zum Halten des Abschattungselementes auf, das derart an der Bauteilhalterung angeordnet ist, dass das Abschattungselement von dem Halterelement mit Abstand von dem aus dem Hohlraum herausragenden nicht zu beschichtenden Bauteilabschnitt gehalten wird. Das Ausbilden des Abschattungselementes als von der Bauteilhalterung getrenntem Element ermöglicht es, Abschattungselemente mit verschiedenen Abmessungen an ein und derselben Bauteilhalterung anzubringen, was die Möglichkeit eröffnet, die Bauteilhalterung für verschieden dimensionierte Bauteile zu verwenden.

Typischerweise ist die Einführöffnung von einem Öffnungsrand begrenzt, dessen Öffnungsabmessung größer als die Abmessung des in den Hohlraum einzuführenden Abschnitt des Bauteils ist, sodass bei eingeführtem Abschnitt des Bauteils ein Spalt zwischen dem Abschnitt und dem Öffnungsrand verbleibt. Das Halteelement oder das Abschattungselement sind dann am Öffnungsrand angeordnet. Optional kann ein Einsteckelement vorhanden sein, das in den Spalt zwischen dem Bauteilabschnitt und dem Öffnungsabschnitt eingeschoben werden kann, um den Hohlraum der Bauteilhalterung vollständig von der Umgebung abzuschirmen. Durch das Abschattungselement wird hierbei erreicht, dass das Einsteckelement so eingeschoben werden kann, dass sein Kontaktbereich mit dem Bauteil vollständig im Spritzschatten liegt.

Insbesondere kann ein an dem Halteelement angeordnetes oder in die Bauteilhalterung integriertes Abschattungselement einen Überstand über den vom Hohlraum nicht geschützten Teil des zu beschichtenden Bauteilabschnitts eines eingeführten Bauteils aufweisen. Mit anderen Worten, der Randbereich des Spritzschattens, in dem sich noch Beschichtungsmaterial ablagern kann, lässt sich zumindest teilweise in den zu beschichtenden Abschnitt des Bauteils verschieben. Dies ist insbesondere dann vorteilhaft, wenn sich der Übergangsbereich, in dem die Beschichtung dünner ausfallen wird als in dem übrigen zu beschichtenden Bereich, in der späteren Anwendung des Bauteils in einer Situation befindet, die das Vorhandensein von weniger Beschichtungsmaterial erlaubt.

Außerdem besteht je nach Geometrie des zu beschichtenden Bauteils die Möglichkeit, die Spritzrichtung zu variieren und so trotz des Überstandes den zu beschichtenden Abschnitt vollständig gleichmäßig zu beschichten und gleichzeitig den nicht zu beschichtenden Abschnitt durch den Spritzschatten zu schützen. Dies kann insbesondere dann realisiert werden, wenn der zu beschichtende Bereich und der nicht zu beschichtende Bereich an ihrem Übergangspunkt einen Winkel von maximal 90° einschließen.

Das Abschattungselement kann insbesondere als Abschattungsblech ausgebildet sein. Dieses kann insbesondere auch fest mit der Bauteilhalterung verbunden sein, beispielsweise verlötet.

Die Bauteilhalterung der erfindungsgemäßen Haltevorrichtung kann insbesondere zum Halten einer Turbinenschaufel als zu beschichtendem Bauteil ausgebildet sein. Eine Turbinenschaufel umfasst typischerweise ein Schaufelblatt, einen Schaufelfuß und eine zwischen dem Schaufelblatt und dem Schaufelfuß angeordnete Schaufelplattform, wobei die Schaufelplattform eine schaufelblattseitige Plattformfläche und eine sich an die schaufelseitige Plattformfläche anschließende Umfangsfläche aufweist. Das Schaufelblatt sowie die schaufelblattseitige Plattformfläche bilden den zu beschichtenden Abschnitt der Turbinenschaufel, wohingegen der Schaufelfuß und die übrigen Plattformflächen den nicht zu beschichtenden Abschnitt der Turbinenschaufel bilden. Die Bauteilhalterung kann nun insbesondere derart ausgestaltet sein, dass sich der Schaufelfuß einer gehaltenen Turbinenschaufel zumindest teilweise im Hohlraum der Bauteilhalterung befindet und wenigstens ein Teil der Umfangsfläche der Schaufelplattform den vom Hohlraum nicht geschützten Teil des nicht zu beschichtenden Bauteilabschnitts bildet. Ein vom Halteelement gehaltenes oder in die Bauteilhalterung integriertes Abschattungselement umgibt dann die Umfangsfläche der Schaufelplattform und gegebenenfalls nicht vom Hohlraum geschützten Abschnitt des Schaufelfußes mit Abstand von diesem beziehungsweise diesen. Auf diese Weise befinden sich die Umfangsfläche der Schaufelplattform und eine etwaige nicht geschützte beispielsweise aus der Bauteilhalterung herausragende Fläche des Schaufelfußes während des Aufspritzens der Beschichtung im Spritzschatten.

Besonders vorteilhaft ist es, wenn ein von dem Halteelement gehaltenes oder in die Bauteilhalterung integriertes Abschattungselement einen Überstand über die Umfangsfläche einer von der Bauteilhalterung gehaltenen Turbinenschaufel in Richtung auf das Schaufelblatt aufweist. Die Umfangsfläche weist in der Regel einen Winkel zur schaufelblattseitigen Plattformfläche von 90° auf. Wenn nun die Spritzrichtung senkrecht zu dieser Umfangsfläche verläuft, befindet sich nicht nur die Umfangsfläche, sondern auch ein Teil des zu beschichtenden Abschnittes der Turbinenschaufel im Spritzschatten. Eine Ablagerung von Beschichtungsmaterial auf der Umfangsfläche oder dem Schaufelfuß kann dadurch besonders zuverlässig vermieden werden. Um nun die im Spritzschatten des Abschattungselements liegenden Teile des zu beschichtenden Abschnittes zu beschichten, braucht nur die Spritzrichtung etwas gedreht zu werden, sodass sie einen spitzen Winkel zur Normalenrichtung der Umfangsfläche einschließt. Dadurch befindet sich nun der zuvor im Spritzschatten gelegene Bereich des zu beschichtenden Abschnittes nicht mehr im Spritzschatten, wobei durch den Überstand gleichzeitig erreicht werden kann, dass sich die Umfangsfläche und die Oberfläche des Schaufelfußes weiterhin im Spritzschatten befinden.

Es ist vorteilhaft, wenn der Abstand des Abschattungselementes vom Bauteil und/oder der Überstand nicht mehr als 10 mm beträgt beziehungsweise betragen. Dadurch kann ungewolltes Beschichten mit abgelenktem Beschichtungsmaterial gering gehalten werden, sodass der Übergang zwischen dem nicht abgeschatteten Bereich und dem vollständig abgeschatteten Bereich klein gehalten werden kann.

Die erfindungsgemäße Bauteilhaltevorrichtung soll insbesondere in einer Prozesskammer zum Einsatz kommen. Sie kann daher eine Fixiereinrichtung umfassen, mit der sie in einer Chargiereinrichtung einer Prozesskammer fixiert werden kann.

In dem erfindungsgemäßen Verfahren zum Beschichten eines Bauteiles, welches sowohl wenigstens einen zu beschichtenden Abschnitt als auch wenigstens einen nicht zu beschichtenden Abschnitt aufweist, wird ein Beschichtungsmaterial auf das Bauteil aufgespritzt. Während des Beschichtens ist das Bauteil mit wenigstens einem Teil seines nicht zu beschichtenden Abschnittes in den Hohlraum einer hohlen Bauteilhalterung eingeführt, wobei ein Teil des nicht zu beschichtenden Abschnitts des Bauteils durch den Hohlraum ungeschützt bleibt. Der von dem Hohlraum ungeschützte Teil des nicht zu beschichtenden Abschnittes wird während des Beschichtungsvorganges abgeschattet. Die durch die Abschattung zu erreichenden Vorteile sind bereits im Zusammenhang mit der erfindungsgemäßen Bauteilhaltevorrichtung beschrieben worden. Auf diese Beschreibung wird hinsichtlich der Vorteile des erfindungsgemäßen Verfahrens Bezug genommen.

Zum Abschatten kann wenigstens ein von dem Bauteil entfernt an der Bauteilhalterung anzuordnendes oder angeordnetes Bauteilelement Verwendung finden. Außerdem kann die Spritzrichtung während des Beschichtens verändert werden, was insbesondere dann vorteilhaft ist, wenn ein Abschattungselement vorhanden ist, das über den nicht zu beschichtenden Abschnitt des Bauteils in Richtung auf den zu beschichtenden Abschnitt übersteht. Die damit erzielbaren Vorteile sind ebenfalls bereits mit Bezug auf die erfindungsgemäße Bauteilhaltevorrichtung beschrieben worden. Auf diese Beschreibung wird hinsichtlich der Vorteile des Veränderns der Spritzrichtung während des Beschichtens Bezug genommen.

Etwaiges nach dem Aufspritzen der Beschichtung im abgeschatteten nicht zu beschichtenden Abschnitt vorhandenes Beschichtungsmaterial kann nach dem Beschichten abgeschliffen werden. Da sich im abgeschatteten Bereich im Vergleich zum nicht abgeschatteten Bereich nur wenig Beschichtungsmaterial ablagert, hält sich der Aufwand zum Abschleifen dieses im abgeschatteten Bereich abgelagerten Beschichtungsmaterials in Grenzen.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.

Figur 1 zeigt beispielhaft eine Gasturbine in einem Längsteilschnitt.

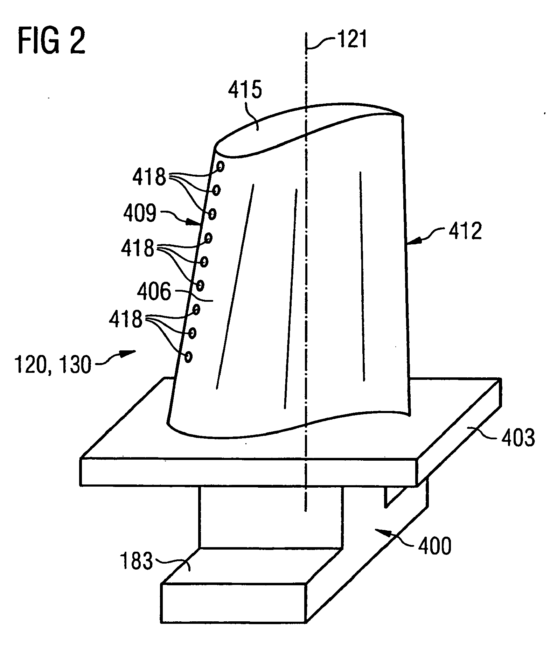

Figur 2 zeigt in perspektivischer Ansicht eine Laufschaufel oder Leitschaufel einer Strömungsmaschine.

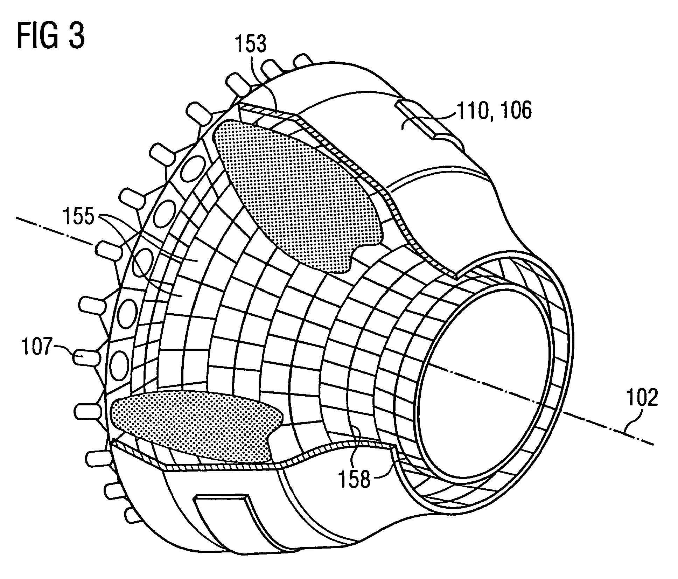

Figur 3 zeigt eine Brennkammer einer Gasturbine.

Figur 4 zeigt ein erstes Ausführungsbeispiel für die erfindungsgemäße Bauteilhaltevorrichtung.

Figur 5 zeigt ein zweites Ausführungsbeispiel für die erfindungsgemäße Bauteilhaltevorrichtung.

Figur 6 zeigt ein drittes Ausführungsbeispiel für die erfindungsgemäße Bauteilhaltevorrichtung.

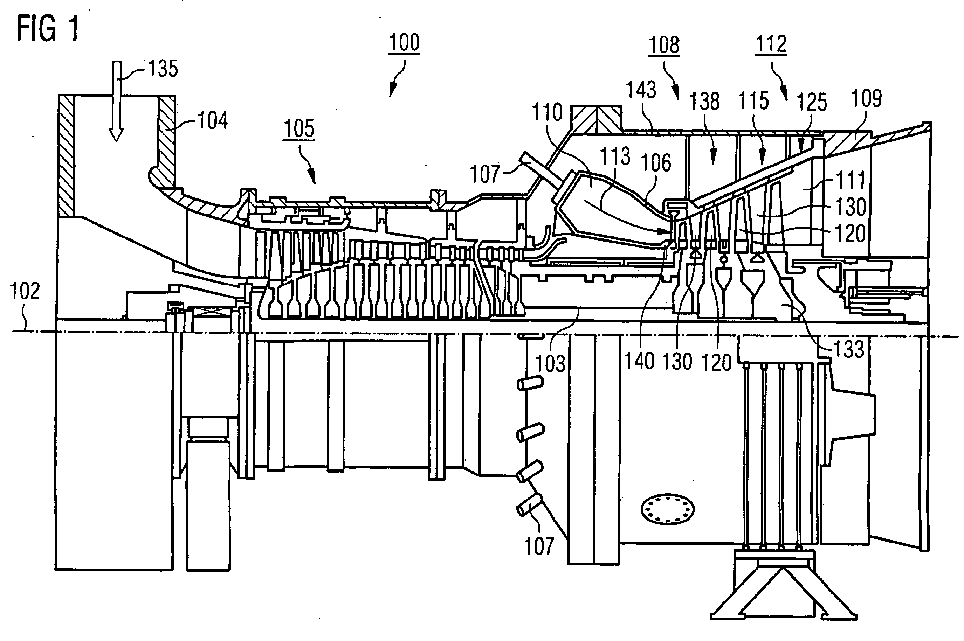

Die Figur 1 zeigt beispielhaft eine Gasturbine 100 in einem Längsteilschnitt.

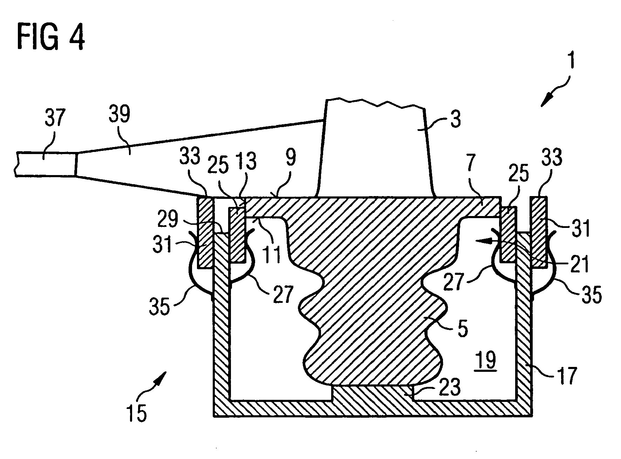

Als Ausführungsbeispiel für eine erfindungsgemäße Bauteilhaltevorrichtung wird nachfolgend mit Bezug auf Figur 4 eine Haltevorrichtung für eine Turbinenschaufel während eines Beschichtungsprozesses, in dem das Beschichtungsmaterial mit einer Spritztechnik aufgebracht wird, beschrieben. Beschichtungen, die aufgespritzt werden, sind beispielsweise MCrAlX-Beschichtungen oder keramische Wärmedämpfschichten. Als Spritzverfahren können beispielsweise thermische Spritzverfahren wie etwa Plasmaspritzen oder Flammspritzen zur Anwendung kommen.

Die in Figur 4 dargestellte Turbinenschaufel 1 weist ein Schaufelblatt 3, einen Schaufelfuß 5 und eine zwischen dem Schaufelfuß 5 und dem Schaufelblatt 3 angeordnete Schaufelplattform 7 auf. Der Schaufelfuß 5 und die Schaufelplattform 7 sind in Figur 4 im Schnitt dargestellt.

Die Schaufelplattform 7 weist eine schaufelblattseitige Oberfläche 9, eine schaufelfußseitige Oberfläche 11 sowie eine die schaufelblattseitige Oberfläche 9 mit der schaufelfußseitigen Oberfläche 11 verbindende Umfangsfläche 13 auf. Die Umfangsfläche schließt mit der schaufelblattseitigen Fläche 9 einen Winkel von im Wesentlichen 90° ein.

Zum Durchführen des Beschichtungsprozesses wird die Turbinenschaufel 1 von einer Bauteilhalterung 15 gehalten. Diese umfasst einen topfartigen Hohlkörper 17, dessen Hohlraum 19 eine Aufnahme für den Schaufelfuß 5 bildet. Der Hohlkörper 17 weist eine Einführöffnung 21 auf, deren Abmessungen größer sind als die Abmessungen der Schaufelplattform 7. Durch die Einführöffnung 21 kann der Schaufelfuß 5 in dem Hohlraum 19 bis zu einem der Einführöffnung 2i gegenüberliegender Sockel 23 eingeführt werden. Während des Beschichtungsprozesses ruht die Turbinenschaufel 1 im Wesentlichen auf dem Sockel 23 und ragt mit der Plattform 7 und einem kleinen, sich unmittelbar an die Plattform 7 anschließenden Teil des Schaufelfußes aus dem Hohlraum 19 heraus.

Bei einer Turbinenschaufel 1 stellen die Oberfläche des Schaufelblattes 3 sowie die schaufelblattseitige Oberfläche 9 der Plattform 7 den zu beschichtenden Abschnitt der Turbinenschaufel dar. Die Umfangsfläche 13 sowie die schaufelfußseitige Oberfläche 11 der Plattform 7 stellen zusammen mit der Oberfläche des Schaufelfußes 5 einen nicht zu beschichtenden Abschnitt der Turbinenschaufel 1 dar. Um den Hohlraum 19 abzuschließen und so den Schaufelfuß 5 während des Spritzprozesses vollständig gegen Eindringen von Beschichtungsmaterial abzuschirmen, finden Einsteckbleche 25 Verwendung, die in eine Klammervorrichtung 27 an der Innenseite des Hohlkörpers 17 eingeschoben und von der Klammervorrichtung 27 gehalten werden können. Die Klammervorrichtung 27 befindet sich derart im Bereich der Einführöffnung 21, dass ein in die Klammervorrichtung eingeführtes Einsteckblech 25 über den Rand 29 der Einführöffnung vorsteht. Die Abmessungen der Einsteckbleche 25 sind derart auf die Abmessung der Einführöffnung und die Abmessung der Schaufelplattform 7 abgestimmt, dass ein eingestecktes Einsteckblech 25 den Spalt zwischen dem Rand 29 der Einführöffnung und der Umfangsfläche 13 der Schaufelplattform 7 überbrückt und an der Umfangsfläche 13 der Schaufelplattform 7 zur Anlage kommt. Dabei ist der Überstand der Einsteckbleche 25 im eingesteckten Zustand über den Rand 29 so gewählt, dass sie zwar an der Umfangsfläche 13 der Schaufelplattform 7 zur Anlage kommen, diese Umfangsfläche jedoch nur in einem an die schaufelfußseitige Oberfläche 11 angrenzenden Abschnitt bedecken. Ein an die schaufelblattseitige Oberfläche 9 angrenzender Abschnitt der Umfangsfläche bleibt von den Einsteckblechen 25 unbedeckt. Auf diese Weise ist der Hohlraum 19 gegen das Eindringen von Beschichtungsmaterial während des Spritzprozesses geschützt, sodass der gesamte Schaufelfuß beim Beschichten von Beschichtungsmaterial freigehalten werden kann. Ebenso ist der von den Einsteckblechen 25 überdeckte Bereich der Umfangsfläche 13 geschützt. Nicht geschützt durch den Hohlraum 19 oder die Einsteckblende 25 ist jedoch der sich an die schaufelblattseitige Oberfläche 9 anschließende Bereich der Umfangsfläche 13. Dennoch gehört auch dieser Bereich zu dem nicht zu beschichtenden Abschnitt der Turbinenschaufel 1.

Um den sich an die schaufelblattseitige Oberfläche 9 anschließenden Teil der Umfangsfläche 13 vor dem Auftreffen von Beschichtungsmaterial während des Beschichtungsprozesses zu schützen, weist die Haltevorrichtung aus Figur 4 zusätzlich Abschattungselemente in Form von Abschattungsblechen 31 auf. Diese sind an der Außenseite des Hohlkörpers 17 angeordnet und stehen über den Rand 19 der Einführöffnung 21 sowie über die Einsteckbleche 25 vor. Und zwar im vorliegenden Ausführungsbeispiel so weit, dass ihre Oberseiten 33 mit der schaufelblattseitigen Oberfläche 9 der Schaufelplattform 7 fluchten. Die Abschirmbleche 31 werden hierbei von wenigstens einem Halteelement gehalten. Das wenigstens ein Halteelement ist im vorliegenden Ausführungsbeispiel durch eine weitere Klammereinrichtung 35 realisiert. Andere Alternativen zum Befestigen der Abschattungsbleche 31 sind jedoch ebenfalls realisierbar, beispielsweise Schraub-, Kleb- oder Schweißverbindungen.

Da sich das Abschattungsblech 31 an der Außenseite des Hohlkörpers 17 befindet, kommt es nicht an der Turbinenschaufel 1 zur Anlage, sodass es keine Abdeckung für einen nicht zu beschichtenden Abschnitt der Turbinenschaufel 1 bildet. Stattdessen erfolgt durch die Abschattungsbleche 31 eine Abschattung der Umfangsfläche 13 der Schaufelplattform 7. Um dies darzustellen, zeigt Figur 4 eine Spritzdüse 37 sowie von der Spritzdüse 37 verspritztes Beschichtungsmaterial 39. Zum Beschichten des Schaufelblattes 3 verläuft die Spritzrechtung weitgehend parallel zur schaufelblattseitigen Oberfläche 9 der Schaufelplattform. Zum Beschichten der schaufelblattseitigen Oberfläche 9 der Schaufelplattform 7 wird die Spritzdüse dann um 90° gedreht, so dass die Spritrichtung senkrecht auf der Oberfläche 9 steht.

Wenn, wie in Figur 4 gezeigt, die Spritzrichtung weitgehend parallel zur schaufelblattseitigen Oberfläche 9 der Schaufelplattform verläuft, befindet sich der nicht von den Einsteckblechen 25 abgedeckte Bereich der Umfangsfläche 13 im Spritzschatten der Abschattungsbleche. Dadurch gelangt nur wenig Beschichtungsmaterial auf diesen Abschnitt der Umfangsfläche 13. Außerdem nimmt die Menge an auf den nicht abgedeckten Bereich der Umfangsfläche 13 auftreffendem Beschichtungsmaterial in Richtung auf die Einsteckbleche 25 hin ab, sodass insbesondere dort, wo die Einsteckbleche 25 an der Umfangsfläche 13 anliegen, gar kein Beschichtungsmaterial mehr auf die Umfangsfläche 13 aufgetragen wird. Dadurch werden Materialbrücken aus Beschichtungsmaterial zwischen den Einsteckblechen 25 und der Umfangsfläche 13 zuverlässig vermieden. Da es nicht zu Materialbrücken kommt, lassen sich Abplatzungen der Beschichtung beim Herausnehmen der Turbinenschaufel 1 aus der Halterung 15 nach dem Abschluss des Beschichtungsprozesses zuverlässig vermeiden. Das auf die Umfangsfläche 13 abgeschiedene Beschichtungsmaterial kann nach dem Beschichtungsprozess mittels eines Schleifverfahrens wieder entfernt werden.

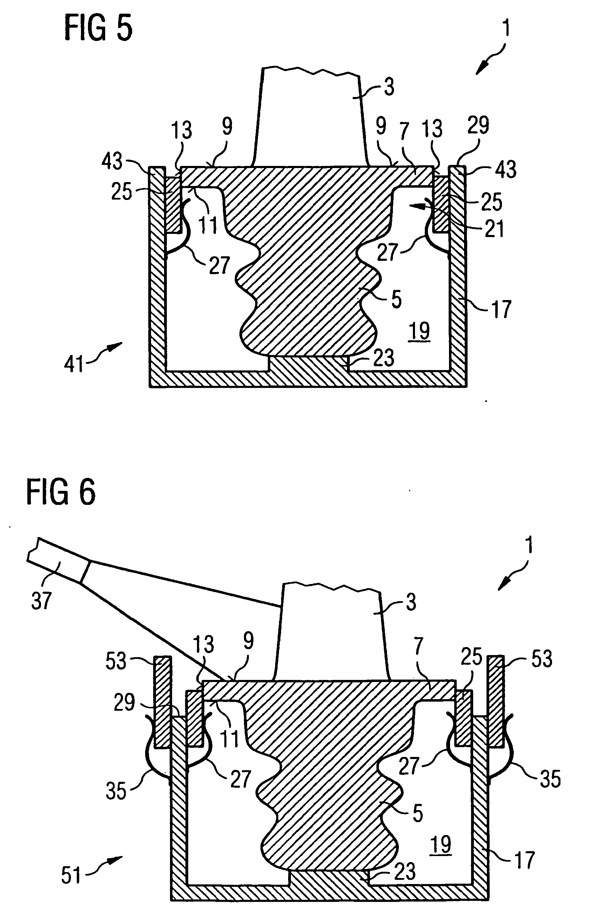

Ein zweites Ausführungsbeispiel für die erfindungsgemäße Bauteilhaltevorrichtung wird nachfolgend mit Bezug auf Figur 5 beschrieben. Elemente, die Elementen aus Figur 4 entsprechen, sind mit denselben Bezugsziffern wie in Figur 4 bezeichnet und werden nicht noch einmal beschrieben, um Wiederholungen zu vermeiden. Es werden daher lediglich die Unterschiede zu der in Figur 4 dargestellten Bauteilhaltevorrichtung erläutert.

Die in Figur 5 dargestellte Bauteilhaltevorrichtung 41 unterscheidet sich von der in Figur 4 dargestellten Bauteilhaltevorrichtung 15 dadurch, dass der Rand 29 der Einführöffnung 21 einen größeren Abstand vom Sockel 23 aufweist, sodass eine in den Hohlraum 19 des Hohlkörpers 17 eingeführte Turbinenschaufel mit ihrem gesamten nicht zu beschichtenden Abschnitt im Inneren des Hohlraums 19 angeordnet ist. Auch dieses Ausführungsbeispiel weist Einsteckbleche 25 auf, um den Spalt zwischen dem Rand 29 der Einführöffnung 21 und der Umfangsfläche 13 der Schaufelplattform 7 zu überbrücken und so den Hohlraum 19 gegen ein Eindringen von Beschichtungsmaterial zu sichern.

Dadurch, dass die Einführöffnung 21 weiter vom Sockel 23 beabstandet ist, steht der Rand 29 der Einführöffnung über die eingesteckten Einsteckbleche 25 vor. Außerdem weist er einen Abstand von der Umfangsfläche 13 auf. Der über die Einsteckbleche 25 vorstehende Abschnitt 43 der Wand des Hohlkörpers 17 stellt in diesem Ausführungsbeispiel ein Abschattungselement dar, das anstatt der Abschattungsbleche 31 aus Figur 4 zur Anwendung kommt. Die Abschattungswirkung im Hinblick auf die Umfangsfläche 13 der Schaufelplattform 7 ist im Wesentlichen die gleiche wie bei dem in Figur 4 dargestellten Ausführungsbeispiel. Sie wird daher nicht noch einmal erläutert. Das Integrieren des Abschattungselementes in die Wand des Hohlkörpers 17 reduziert die Anzahl der Teile der Bauteilhaltevorrichtung. Diese Ausführungsvariante bietet sich insbesondere dann an, wenn immer Turbinenschaufeln 1 mit denselben Abmessungen gehalten werden sollen.

Falls die Abmessungen der zu beschichtenden Turbinenbauteile hingegen variieren, ist die in Figur 4 dargestellte Ausführungsvariante der Bauteilhaltevorrichtung von Vorteil, da durch die Verwendung anders dimensionierter Abschirmbleche 31 eine Anpassung an die Abmessung der zu beschichtenden Turbinenschaufel erfolgen kann. In beiden Ausführungsbeispielen kann zudem durch Verwendung unterschiedlicher Einsteckbleche 25 eine Anpassung an den zu überbrückenden Spalt zwischen dem Rand 29 des Hohlkörpers 17 und der Umfangsfläche 13 der Schaufelplattform 7 erfolgen.

Ein drittes Ausführungsbeispiel für die erfindungsgemäße Bauteilhaltevorrichtung ist in Figur 6 dargestellt. Elemente aus Figur 6, die Elementen aus Figur 4 entsprechen, sind mit denselben Bezugsziffern wie in Figur 4 bezeichnet und werden nicht noch einmal erläutert, um Wiederholungen zu vermeiden.

Der einzige Unterschied der Bauteilhaltevorrichtung 51 gemäß dem dritten Ausführungsbeispiel im Vergleich zum ersten Ausführungsbeispiel besteht darin, dass die Abschattungsbleche 53 größer sind als die Abschattungsbleche 31 aus Figur 4. Dadurch stehen diese über die Umfangsfläche 13 der Turbinenschaufel 1 in Richtung auf das Schaufelblatt über. Der Überstand beträgt im vorliegenden Ausführungsbeispiel nicht mehr als 10 mm und liegt vorteilhafterweise im Bereich zwischen 3 und 5 mm.

Dadurch, dass die Abschattungsbleche 53 über den aus dem Hohlraum herausragenden nicht zu beschichtenden Abschnitt der Turbinenschaufel 1 einen Überstand aufweisen, kann nun mit der Spritzgeometrie, wie sie in Figur 4 dargestellt ist, das Beschichtungsmaterial die Umfangsfläche 13 noch schlechter erreichen als in der in Figur 4 dargestellten Ausführungsvariante. Dadurch gelangt noch weniger Beschichtungsmaterial auf diese Umfangsfläche, sodass das Schleifen nach dem Beschichtungsprozess reduziert werden und unter Umständen vollständig entfallen kann. Allerdings muss nun zum Beschichten des Schaufelblattes 3 bis hin zur schaufelblattseitigen Oberfläche 9 der Schaufelplattform 7 die Spritzrichtung der Spritzdüse 37 in Richtung auf die Oberflächennormale der plattformseitigen Oberfläche 9 geschwenkt werden, um eine Abschattung der an die schaufelblattseitige Oberfläche 9 der Schaufelplattform 7 unmittelbar angrenzenden Oberflächenabschnitte des Schaufelblattes zu vermeiden. Dies ist in Figur 6 schematisch dargestellt. Der Spritzprozess kann jedoch weiterhin so durchgeführt werden, dass auch bei einem Verschwenken der Spritzdüsen in Richtung auf die Oberflächennormale der schaufelblattseitigen Plattformoberfläche 9 die Abschattungsbleche 53 die Umfangsfläche 13 gegenüber der Spritzdüse 37 abschatten.

In der in Figur 6 dargestellten Variante kann die Spritzrichtung während des Spritzprozesses variiert werden, um alle Oberflächenbereiche des zu beschichtenden Abschnittes der Turbinenschaufel 1 gleichmäßig zu beschichten. Zum Beschichten der schaufelblattseitigen Oberfläche 9 reicht es aus, wenn die Spritzrichtung einen stumpfen Winkel mit der Oberflächennormalen der schaufelblattseitigen Oberfläche 9 aufweist, wie dies in Figur 6 dargestellt ist. Die Spritzrichtung weist dann einen spitzen Winkel mit der Umfangsfläche 13 auf, so dass diese weiterhin wirksam durch die überstehenden Abschattungsbleche geschützt ist. Selbstverständlich kann auch das mit Bezug auf Figur 5 beschriebene Ausführungsbeispiel mit einem Abschattungsabschnitt versehen werden, der einen Überstand über in Richtung auf das Schaufelblatt aufweist.

In allen drei Ausführungsvarianten der erfindungsgemäßen Bauteilhalterung kann diese eine Befestigungsvorrichtung zum Befestigen an einer Chargiereinheit, die in eine Prozesskammer eingebracht werden kann oder sich in einer Prozesskammer befindet, aufweisen. Die Turbinenschaufeln können dann außerhalb der Chargiereinheit beziehungsweise außerhalb der Prozesskammer in die Bauteilhalterung eingeführt und anschließend in die Chargiereinheit beziehungsweise die Prozesskammer zum Durchführen des Spritzprozesses eingebracht werden. Dies bietet insbesondere die Möglichkeit, Turbinenschaufeln für den Einsatz in der Prozesskammer vorzubereiten, während andere Turbinenschaufeln sich in der Chargiereinheit in der Prozesskammer befinden.

## Patentansprüche

1. Bauteilhaltevorrichtung zur Verwendung in einer Beschichtungsanlage, in welcher ein Beschichtungsmaterial auf ein Bauteil (1) gespritzt wird, das einen zu beschichtenden (3, 9) und einen nicht zu beschichtenden Abschnitt (5, 11, 13) aufweist, mit einer Bauteilhalterung (15, 41, 51), die einen Hohlraum (19) zur wenigstens teilweisen Aufnahme des nicht zu beschichtenden Abschnitts (5, 11, 13) des Bauteils (1) und eine Einführöffnung (21) zum Einführen des Bauteils (1) aufweist, wobei ein Teil (13) des nicht zu beschichtenden Abschnitts (5, 11, 13) des Bauteils (1) durch den Hohlraum (19) nicht geschützt ist,
**dadurch gekennzeichnet, dass**
wenigstens ein an der Bauteilhalterung (15, 41, 51) anzuordnendes oder in die Bauteilhalterung integriertes Abschattungselement (31, 43) vorhanden ist, das mit Abstand von dem durch den Hohlraum (19) nicht geschützten Teil (13) des nicht zu beschichtenden Bauteilabschnitts (5, 11, 13) eines eingeführten Bauteils (1) anzuordnen oder angeordnet ist.

2. Bauteilhaltevorrichtung nach Anspruch 1,
**dadurch gekennzeichnet, dass**
- die Bauteilhalterung (15, 51) derart ausgestaltet ist, dass der nicht geschützte Teil (13) des nicht zu beschichtenden Abschnitts (5, 11, 13) aus dem Hohlraum (19) herausragt,
- das Abschattungselement (31, 53) wenigstens ein von der Bauteilhalterung (15,51) getrenntes Abschattungselement (31, 53) ist und
- die Bauteilhalterung (15, 51) wenigstens ein Halteelement (35) zum Halten des Abschattungselementes (31, 53) aufweist, das derart an der Bauteilhalterung (15, 51) angeordnet ist, dass das Abschattungselement (31, 53) von dem Halteelement (35) mit Abstand von dem aus dem Hohlraum (19) herausragenden nicht zu beschichtenden Bauteilabschnitt (13) gehalten wird.

3. Bauteilhaltevorrichtung nach Anspruch 1 oder Anspruch 2,
**dadurch gekennzeichnet, dass**
die Einführöffnung (21) von einem Öffnungsrand (29) begrenzt ist, dessen Öffnungsabmessung größer als die Abmessung des in den Hohlraum (19) einzuführenden Abschnitts des Bauteils (1) ist, so dass bei eingeführtem nicht zu beschichtendem Abschnitt (5, 11, 13) des Bauteils ein Spalt zwischen dem Abschnitt (5, 11, 13) und dem Öffnungsrand (29) verbleibt, und das Haltelement(35) oder das Abschattungselement (43) am Öffnungsrand (29) angeordnet ist.

4. Bauteilhaltevorrichtung, nach Anspruch 3,
**dadurch gekennzeichnet, dass**
außerdem ein Einsteckelement (25) vorhanden ist, das in den Spalt zwischen dem nicht zu beschichtenden Abschnitt (5, 11, 15) des Bauteils (1) und dem Öffnungsrand (29) eingeschoben werden kann.

5. Bauteilhaltevorrichtung nach einem der Ansprüche 1 bis 4,
**dadurch gekennzeichnet, dass**
ein an dem Haltelement angeordnetes oder in die Bauteilhalterung integriertes Abschattungselement (53) einen Überstand über den vom Hohlraum (19) nicht geschützte Teile (13) des nicht zu beschichtenden Abschnitts (5, 11, 13) eines eingeführten Bauteils (19) aufweisen.

6. Bauteilhaltevorrichtung nach einem der Ansprüche 1 bis 5,
**dadurch gekennzeichnet, dass**
das Abschattungselement als Abschattungsblech (31) ausgestaltet ist.

7. Bauteilhaltevorrichtung nach einem der Ansprüche 1 bis 6,
**dadurch gekennzeichnet, dass**
die Bauteilhalterung 15, 41, 51) zum Halten einer Turbinenschaufel (1) als zu beschichtendem Bauteil ausgebildet ist.

8. Bauteilhaltevorrichtung nach Anspruch 7,
**dadurch gekennzeichnet, dass**
- die Bauteilhalterung (15, 41, 51) zum Halten einer Turbinenschaufel (1) ausgebildet ist, welche ein Schaufelblatt (3), einen Schaufelfuß (5) und eine zwischen dem Schaufelblatt(3) und dem Schaufelfuß (5) angeordnete Schaufelplattform aufweist, wobei die Schaufelplattform (7) eine schaufelblattseitige Plattformfläche (9) und eine sich an die schaufelseitige Plattformfläche anschließende Umfangsfläche (13) aufweist, wobei das Schaufelblatt (3) sowie die schaufelblattseitige Plattformfläche (9) den zu beschichtenden Abschnitt der Turbinenschaufel (1) bilden und wobei der Schaufelfuß (5) sowie die übrigen Plattformflächen (11, 13) den nicht zu beschichtenden Abschnitt der Turbinenschaufel (1) bilden,
- die Bauteilhalterung (15, 41, 51) derart ausgebildet ist, dass sich zumindest der Schaufelfuß (5) einer gehaltenen Turbinenschaufel (1) wenigstens teilweise im Hohlraum (19) der Bauteilhalterung (15, 41, 51) befindet und zumindest eine Teil der Umfangsfläche (13) der Schaufelplattform (7) den von dem Hohlraum (19) nicht geschützten Teil des nicht zu beschichtenden Bauteilabschnitts 5, 11, 13) bildet, und
- ein vom Halteelement (35) gehaltenes oder in die Bauteilhalterung integriertes Abschattungselement (31, 53) die Umfangsfläche (13) der Schaufelplattform (1) und ggf. einen vom Hohlraum (19) nicht geschützten Abschnitt des Schaufelfußes (5) mit Abstand von dieser bzw. diesen umgibt.

9. Bauteilhaltevorrichtung nach Anspruch 8 und Anspruch 5,
**dadurch gekennzeichnet, dass**
ein von dem Haltelement (35) gehaltenes oder in die Bauteilhalterung integriertes Abschattungselement (53) einen Überstand in Richtung auf das Schaufelblatt (3) über die Umfangsfläche (13) einer von der Bauteilhalterung (51) gehaltenen Turbinenschaufel (1) aufweist.

10. Bauteilhaltevorrichtung nach einem der vorangehenden Ansprüche,
**dadurch gekennzeichnet, dass**
der Abstand des Abschattungselements (35, 43) vom Bauteil (1) und/oder der Überstand nicht mehr als 10 mm beträgt bzw. betragen.

11. Bauteilhaltevorrichtung nach einem der vorangehenden Ansprüche,
**dadurch gekennzeichnet, dass**
die Bauteilhalterung (15, 41, 51) eine Fixiereinrichtung umfasst, mit der sie in einer Chargiereinrichtung einer Prozesskammer fixiert werden kann.

12. Verfahren zum Beschichten eines Bauteils (1), welches sowohl wenigstens einen zu beschichtenden Abschnitt (3, 9) als auch wenigstens einen nicht zu beschichtenden Abschnitt (5, 11, 13) aufweist, in dem ein Beschichtungsmaterial auf das Bauteil (1) aufgespritzt wird und das Bauteil (1) während des Aufspritzens mit wenigstens einem Teil des nicht zu beschichtende Abschnitts (5, 11, 13) in den Hohlraum (19) einer hohlen Bauteilhalterung (15, 41, 51) eingeführt ist, wobei ein Teil (13) des nicht zu beschichtenden Abschnitts(56, 11, 13) des Bauteils (1) durch den Hohlraum (19) ungeschützt bleibt,
**dadurch gekennzeichnet, dass**
der vom Hohlraum (19) ungeschützte Teil (13) des nicht zu beschichtenden Abschnitts (5, 11, 13) während des Beschichtungsvorgangs abgeschattet wird.

13. Verfahren nach Anspruch 12,
**dadurch gekennzeichnet, dass**
zum Abschatten wenigstens ein von dem Bauteil (1) entfernt an der Bauteilhalterung (15, 41, 51) anzuordnendes oder angeordnetes Abschattungselement (35, 43, 53) Verwendung findet.

14. Verfahren nach Anspruch 12 oder Anspruch 13,
**dadurch gekennzeichnet, dass**
die Spritzrichtung während des Beschichtens verändert wird.

15. Verfahren nach einem der Ansprüche 12 bis 14,
**dadurch gekennzeichnet, dass**
nach dem Aufspritzen der Beschichtung etwaiges im abgeschalteten nicht zu beschichtenden Abschnitt (13) vorhandenes Beschichtungsmaterial abgeschliffen wird.

## Claims

1. Component holding device for use in a coating facility, in which a coating material is sprayed onto a component (1) having a portion (3, 9) which is to be coated and a portion (5, 11, 13) which is not to be coated, comprising a component holder (15, 41, 51), which has a hollow space (19) for at least partially receiving that portion (5, 11, 13) of the component (1) which is not to be coated, and an insertion opening (21) for inserting the component (1), wherein a part (13) of that portion (5, 11, 13) of the component (1) which is not to be coated is not protected by the hollow space (19),
**characterized in that**
provision is made of at least one shading element (31, 43), which is to be arranged on the component holder (15, 41, 51) or is integrated in the component holder, and is to be or is arranged at a distance from the part (13), which is not protected by the hollow space (19), of that component portion (5, 11, 13) of an inserted component (1) which is not to be coated.

2. Component holding device according to Claim 1,
**characterized in that**
- the component holder (15, 51) is configured in such a manner that the unprotected part (13) of the portion (5, 11, 13) which is not to be coated protrudes out of the hollow space (19),
- the shading element (31, 53) is at least one shading element (31, 53) which is separated from the component holder (15, 51), and
- the component holder (15, 51) has at least one holding element (35) for holding the shading element (31, 53), which holding element is arranged on the component holder (15, 51) in such a manner that the shading element (31, 53) is held by the holding element (35) at a distance from the component portion (13) which is not to be coated and protrudes out of the hollow space (19).

3. Component holding device according to Claim 1 or Claim 2,
**characterized in that**
the insertion opening (21) is delimited by an opening rim (29), the opening dimension of which is greater than the dimension of that portion of the component (1) which is to be inserted into the hollow space (19), such that, when that portion (5, 11, 13) of the component which is not to be coated is inserted, a gap remains between the portion (5, 11, 13) and the opening rim (29), and the holding element (35) or the shading element (43) is arranged on the opening rim (29).

4. Component holding device according to Claim 3,
**characterized in that**
provision is also made of a plug-in element (25), which can be pushed into the gap between that portion (5, 11, 13) of the component (1) which is not to be coated and the opening rim (29).

5. Component holding device according to one of Claims 1 to 4,
**characterized in that**
a shading element (53) arranged on the holding element or integrated in the component holder protrudes beyond the parts (13), which are not protected by the hollow space (19), of that portion (5, 11, 13) of an inserted component (1) which is not to be coated.

6. Component holding device according to one of Claims 1 to 5,
**characterized in that**
the shading element is configured as a shading plate (31).

7. Component holding device according to one of Claims 1 to 6,
**characterized in that**
the component holder (15, 41, 51) is designed to hold a turbine blade or vane (1) as the component to be coated.

8. Component holding device according to Claim 7, **characterized in that**
- the component holder (15, 41, 51) is designed to hold a turbine blade or vane (1) having a main blade or vane part (3), a blade or vane root (5) and a blade or vane platform arranged between the main blade or vane part (3) and the blade or vane root (5), wherein the blade or vane platform (7) has a platform surface (9) on the side of the main blade or vane part and a circumferential surface (13) adjoining the platform surface on the side of the blade or vane, wherein the main blade or vane part (3) and also the platform surface (9) on the side of the main blade or vane part form that portion of the turbine blade or vane (1) which is to be coated, and wherein the blade or vane root (5) and also the other platform surfaces (11, 13) form that portion of the turbine blade or vane (1) which is not to be coated,
- the component holder (15, 41, 51) is designed in such a manner that at least the blade or vane root (5) of a turbine blade or vane (1) being held is located at least partially in the hollow space (19) of the component holder (15, 41, 51), and at least a part of the circumferential surface (13) of the blade or vane platform (7) forms the part, which is not protected by the hollow space (19), of the component portion (5, 11, 13) which is not to be coated, and
- a shading element (31, 53) held by the holding element (35) or integrated in the component holder surrounds the circumferential surface (13) of the blade or vane platform (7) and, if appropriate, a portion of the blade or vane root (5) which is not protected by the hollow space (19) at a distance therefrom.

9. Component holding device according to Claim 8 and Claim 5,
**characterized in that**
a shading element (53) held by the holding element (35) or integrated in the component holder protrudes in the direction of the main blade or vane part (3) beyond the circumferential surface (13) of a turbine blade or vane (1) held by the component holder (51).

10. Component holding device according to one of the preceding claims,
**characterized in that**
the distance between the shading element (31, 43) and the component (1) and/or the protrusion amounts or amount to no more than 10 mm.

11. Component holding device according to one of the preceding claims,
**characterized in that**
the component holder (15, 41, 51) comprises a fixing device, by way of which it can be fixed in a charging device of a process chamber.

12. Method for coating a component (1) having both at least one portion (3, 9) which is to be coated and at least one portion (5, 11, 13) which is not to be coated, in which method a coating material is sprayed onto the component (1) and the component (1) is inserted with at least part of the portion (5, 11, 13) which is not to be coated into the hollow space (19) of a hollow component holder (15, 41, 51) during the spraying-on process, wherein a part (13) of that portion (5, 11, 13) of the component (1) which is not to be coated remains unprotected by the hollow space (19),
**characterized in that**
the part (13), which is not protected by the hollow space (19), of the portion (5, 11, 13) which is not to be coated is shaded during the coating process.

13. Method according to Claim 12,
**characterized in that**
at least one shading element (31, 43, 53) which is to be or is arranged on the component holder (15, 41, 51) at a distance from the component (1) is used for shading.

14. Method according to Claim 12 or Claim 13,
**characterized in that**
the injection direction is changed during the coating process.

15. Method according to one of Claims 12 to 14,
**characterized in that**
any coating material present in the shaded portion (13) which is not to be coated is abraded after the coating has been sprayed on.

## Revendications

1. Dispositif de support de composant à utiliser dans une installation de revêtement, dans laquelle une matière de revêtement est projetée sur un composant ( 1 ) qui comporte une section ( 3, 9 ) à revêtir et une section ( 5, 11, 13 ) à ne pas revêtir comprenant une fixation ( 15, 41, 51) de composant, qui comporte une cavité (19) de réception au moins partiellement de la section ( 5, 11, 13 ) du composant ( 1 ) qui n'est pas à revêtir, et une ouverture ( 21 ) d'introduction pour l'introduction du composant ( 1 ), une partie ( 13 ) de la section ( 5, 11, 13 ) du composant ( 1 ) qui n'est pas à revêtir n'étant pas protégée par la cavité ( 19 ),
**caractérisé en ce que**
il y a au moins un élément ( 31, 43) d'occultation, qui est disposé sur la fixation ( 15, 41, 51) de composant ou qui est intégré à la fixation de composant et qui peut être disposé ou est disposé à distance de la partie ( 13 ), non protégée par la cavité ( 19 ), de la section ( 5, 11, 13 ) d'un composant ( 1 ) introduit qui n'est pas à revêtir.

2. Dispositif de support de composant suivant la revendication 1,
**caractérisé en ce que**
- la fixation ( 15, 51) de composant est telle que la partie, non protégée, de la section (5, 11, 13) qui n'est pas à revêtir dépasse de la cavité ( 19 ),
- l'élément ( 31, 53 ) d'occultation est au moins un élément ( 31, 53 ) d'occultation séparé de la fixation ( 15 ) de composant et
- la fixation ( 15, 51 ) de composant comporte au moins un élément (35) de maintien pour le maintien de l'élément ( 31, 53) d'occultation, qui est monté sur la fixation ( 15, 51) de composant de manière à ce que l'élément ( 31, 53) d'occultation soit maintenu par l'élément ( 35) de maintien à distance de la section ( 13 ) du composant qui dépasse de la cavité ( 13 ) et n'est pas à revêtir.

3. Dispositif de support de composant suivant la revendication 1 ou revendication 2,
**caractérisé en ce que**
l'ouverture, ( 21 ) d'introduction est délimitée par un bord ( 29) d'ouverture dont la dimension d'ouverture est plus grande que la dimension de la section du composant ( 1 ) à introduire dans la cavité ( 19 ) de sorte que, lorsqu'une section ( 5, 11, 13 ) du composant qui n'est pas à revêtir est introduite, il subsiste un intervalle entre la section ( 5, 11, 13 ) et le bord ( 29) de l'ouverture, et l'élément ( 35 ) de maintien ou l'élément ( 43 ) d'occultation est monté sur le bord ( 29 ) de l'ouverture.

4. Dispositif de support de composant suivant la revendication 3,
**caractérisé en ce qu'**il a en outre un élément ( 25) d'enfichage qui peut être introduit dans l'intervalle compris entre la section ( 5, 11, 13 ) du composant qui n'est pas à revêtir et le bord ( 29 ) de l'ouverture.

5. Dispositif de support de composant suivant la revendication 1 à 4,
**caractérisé en ce que**
un élément ( 53 ) d'occultation monté sur un élément de maintien ou intégré à la fixation de composant dépasse des parties, ( 13 ), non protégées par la cavité ( 19 ), de la section ( 5, 11, 13) d'un composant ( 19) introduit qui n'est pas à revêtir.

6. Dispositif de support de composant suivant l'une des revendications 1 à 5,
**caractérisé en ce que**
l'élément d'occultation est conformé en tôle ( 31 ) d'occultation.

7. Dispositif de support de composant suivant l'une des revendications 1 à 6,
**caractérisé en ce que**
la fixation ( 15, 41, 51) de composant est constituée pour le maintien d'une aube ( 1) de turbine en tant que composant à revêtir.

8. Dispositif de support de composant suivant la revendication 7,
**caractérisé en ce que**
- la fixation ( 15, 41, 51) de composant est constituée pour le maintien d'une aube ( 1 ) de turbine, qui a une lame ( 3) d'aube, une emplanture ( 5) d'aube et une plateforme d'aube disposée entre la lame ( 3 ) de l'aube et l'emplanture ( 5 ) de l'aube, a plateforme ( 7 ) de l'aube ayant une surface ( 9 ) de plateforme du côté de la lame de l'aube et une surface ( 13 ) périphérique se raccordant à la surface de la plateforme du côté de l'aube, la lame ( 3 ) de l'aube ainsi que la surface ( 9 ) de plateforme du côté de la lame de l'aube formant la section à revêtir de l'aube (1 ) de turbine et l'emplanture ( 3) de l'aube ainsi que les autres surfaces ( 11, 13 ) de la plateforme formant la section à ne pas revêtir de l'aube ( 1 ) de turbine,
- la fixation ( 15, 41, 51 ) de composant est telle que au moins l'emplanture ( 5 ) de l'aube d'une aube (1) de turbine maintenue se trouve au moins partiellement dans la cavité ( 19 ) de la fixation ( 15, 41, 51 ) de composant et qu'au moins une partie de la surface ( 13 ) périphérique de la plateforme ( 7 ) de l'aube forme la partie, non protégée par la cavité ( 19 ), de la section ( 5, 11, 13) du composant à ne pas revêtir, et
- un élément ( 31, 53 ) d'occultation maintenu par l'élément ( 35 ) ou intégré à la fixation de composant entoure la surface ( 13 ) périphérique de la plateforme ( 1 ) de l'aube et le cas échéant une section, non protégée par la cavité (19, de l'emplanture ( 5 ) de l'aube, en en étant à distance.

9. Dispositif de support de composant suivant la revendication 8 et la revendication 5,
**caractérisé en ce que**
un élément ( 53 ) d'occultation maintenu par l'élément ( 35) de maintien ou intégré à la fixation de composant dépasse dans la direction de la lame de l'aube de la surface ( 13 ) périphérique d'une aube ( 1 ) de turbine maintenue par la fixation ( 51 ) de composant.

10. Dispositif de support de composant suivant l'une des revendications précédentes,
**caractérisé en ce que**
la distance de l'élément ( 35, 43 ) d'occultation au composant ( 1 ) et/ou le dépassement n'est pas ou ne sont pas supérieur à 10 mm.

11. Dispositif de support de composant suivant l'une des revendications précédentes,
**caractérisé en ce que**
la fixation ( 15, 41, 51 ) de composant comprend un dispositif d'immobilisation, par lequel elle peut être immobilisée dans un dispositif de chargement d'une chambre de processus.

12. Procédé de revêtement d'un composant ( 1 ) qui a à la fois au moins une section ( 3, 9) à revêtir et au moins une section ( 5, 11, 13) à ne pas revêtir, dans lequel on projette une matière de revêtement sur le composant ( 1 ) et on introduit le composant ( 1) pendant la projection avec au moins une partie de la section ( 5, 11, 13 ) à ne pas revêtir dans la cavité ( 19 ) d'une fixation ( 15, 41, 51) de composant creuse, une partie ( 13 ) de la section ( 56, 11, 13 ) du composant ( 1 ) à ne pas revêtir restant non protégée par la cavité ( 19 ),
**caractérisé en ce que**
la partie ( 13) non protégée par la cavité ( 19) de la section ( 5, 11, 13 ) à ne pas revêtir est occultée pendant l'opération de revêtement.

13. Procédé suivant la revendication 12,
**caractérisé en ce que**
on utilise pour l'occultation au moins un élément ( 35, 43, 53) d'occultation monté ou à monter sur la fixation ( 15, 41, 51) de composant en étant éloigné du composant ( 1 ).

14. Procédé suivant la revendication 12 ou revendication 13,
**caractérisé en ce que**
on modifie la direction de projection pendant le revêtement.

15. Procédé suivant l'une des revendications 12 à 14,
**caractérisé en ce que**
après la projection du revêtement, on enlève par polissage de la matière de revêtement éventuellement présente dans la section ( 13 ) occultée qui n'est pas revêtir.
